# EUROPÄISCHE PATENTSCHRIFT

(11) **EP 2 734 432 B1**
(45) Veröffentlichungstag und Bekanntmachung des Hinweises auf die Patenterteilung: **09.09.2015**
(21) Anmeldenummer: 12730389.9
(22) Anmeldetag: 23.06.2012
(51) Int. Cl.: B62D 27/02, B62D 29/00, B29C 45/14

(54) **VERBINDUNGSSTRUKTUR FÜR EINEN KRAFTWAGEN UND VERFAHREN ZU DEREN HERSTELLUNG**
CONNECTING STRUCTURE FOR A MOTOR VEHICLE AND METHOD FOR PRODUCING SAME
STRUCTURE D'ASSEMBLAGE DESTINÉE À UN VÉHICULE AUTOMOBILE ET PROCÉDÉ DE FABRICATION DE LADITE STRUCTURE

(30) Priorität: 20.07.2011 DE 102011108156
(43) Veröffentlichungstag der Anmeldung: 28.05.2014
(73) Patentinhaber: Daimler AG, 70327 Stuttgart (DE)
(72) Erfinder: EIPPER, Konrad, 72108 Rottenburg (DE)
(74) Vertreter: JENSEN & SON
(86) Internationale Anmeldenummer: PCT/EP2012/002655
(87) Internationale Veröffentlichungsnummer: WO 2013/010619

(56) Entgegenhaltungen:
- DE-A1-102006 026 385
- US-A1- 2007 182 180

## Beschreibung

Die Erfindung betrifft ein Verfahren zum Herstellen einer Verbindungsstruktur für einen Kraftwagen gemäß dem Oberbegriff von Patentanspruch 1. Des Weiteren betrifft die Erfindung eine Verbindungsstruktur für einen Kraftwagen gemäß dem Oberbegriff von Patentanspruch 6.

Eine derartige Verbindungsstruktur bzw. ein Verfahren zur Herstellung einer solchen Verbindungsstruktur sind bereits aus der DE 10 2006 026 385 A1 als bekannt zu entnehmen. Dabei werden eine Mehrzahl von Hohlprofilträgern über einen jeweiligen Knoten miteinander verbunden, indem zunächst die Hohlprofilträger in eine inkompressible hohle Einlage eingesteckt werden. Im Anschluss daran werden die Einlage und deren Trägeröffnungen, in welche die Trägerenden der Hohlprofilträger eingesteckt werden, mit getränktem und aushärtbarem Faserwerkstoff, insbesondere mit Fasermatten, umgeben. Hierzu wird der Faserwerkstoff mit flüssigem Kunststoff durchtränkt und in ein Umformwerkzeug eingelegt. Im Anschluss daran wird das Umformwerkzeug geschlossen und unter Temperatureinfluss der mit dem flüssigen Kunststoff getränkte Faserwerkstoff ausgehärtet. Hierdurch wird ein jeweiliger Kunststoffknoten - bestehend aus der Einlage und der entsprechenden Umbettung aus Faserwerkstoff - geschaffen, über welchen die Hohlprofilträger miteinander verbunden sind.

Aufgabe der vorliegenden Erfindung ist es, ein Verfahren und eine Verbindungsstruktur der eingangs genannten Art so weiterzubilden, dass eine Verbindungsstruktur mit einem vereinfachten Aufbau sowie einem reduziertem Gewicht geschaffen ist.

Diese Aufgabe wird erfindungsgemäß durch ein Verfahren und eine Verbindungsstruktur mit den Merkmalen der Patentansprüche 1 bzw. 6 gelöst. Vorteilhafte Ausgestaltungen mit zweckmäßigen Weiterbildungen finden sich in den jeweils abhängigen Ansprüchen. Um ein Verfahren zu schaffen, mittels welchem eine Verbindungsstruktur der eingangs genannten Art mit einem vereinfachten Aufbau und einem reduzierten Gewicht zu schaffen, wird zunächst wenigstens ein Faserhalbzeug hergestellt, über welches die wenigstens zwei Profilelemente miteinander zu verbinden sind. Hierzu wird das jeweilige Faserhalbzeug mit entsprechenden Aufnahmen für korrespondierende Verbindungsbereiche der Profilelemente versehen.

Im Anschluss an die Herstellung des Faserhalbzeugs wird dieses dann in einem nächsten Verfahrensschritt mit den jeweiligen Profilelementen verbunden, beispielsweise indem die entsprechenden Verbindungsbereiche der Profilelemente in die korrespondierenden Aufnahmen des Faserhalbzeugs eingesteckt werden.

Nach dem Einstecken oder dergleichen Verbinden der Profilelemente mit dem korrespondierenden Faserhalbzeug wird dieser Zusammenbau in ein Werkzeug eingelegt und dieses geschlossen. Als im Rahmen der Erfindung mit umfasst ist es dabei zu betrachten, dass das Verbinden der jeweiligen Profilelemente mit dem korrespondierenden Faserhalbzeug auch erst beim bzw. durch das Einlegen in das Werkzeug erfolgen kann.

Im Anschluss an das Einlegen der Bauteile in eine eine entsprechende Textur aufweisende Form des Werkzeugs und das Schließen des Werkzeugs wird zur Herstellung des jeweiligen Kunststoffknotenelements ein Kunststoff, insbesondere ein Harz, in einen hierfür vorgesehenen Formbereich der Form des Werkzeugs, in welchem das Faserhalbzeug positioniert ist, eingespritzt. Dies erfolgt in einem Spritzpressprozess, welcher üblicherweise auch als RTM-Prozess bezeichnet wird.

Schließlich erfolgt in einem weiteren Verfahrensschritt das Aushärten des jeweiligen Kunststoffknotenelements im Werkzeug, und zwar vorzugsweise durch eine entsprechende Wärme- und/oder Druckbeaufschlagung.

Insgesamt wird somit eine Verbindungsstruktur geschaffen, welche sich im Besonderen durch die Art der Gestaltung der jeweiligen Kunststoffknotenelemente auszeichnet. Diese werden - wie erläutert - in einem Spritzpressprozess unter Verwendung entsprechender Faserhalbzeuge hergestellt. Derartige Kunststoffknotenelemente haben dabei beispielsweise den Vorteil, dass sie so stabil und steif ausgebildet sein können, dass sie auf hervorragende Weise geeignet sind, Profilelemente von Karosseriestrukturen oder anderen Fahrzeugbauteilen wie beispielsweise Integralträgern oder Achsträgern miteinander zu verbinden. Dabei sind derartige Kunststoffknotenelemente besonders leicht herstellbar, so dass sich diese insbesondere zur Schaffung von leichtgewichtigen komplexen Strukturen eignen. Ein weiterer Vorteil derartiger Kunststoffknotenelemente besteht darin, dass diese mit einer hohen Fertigungsgenauigkeit reproduzierbar herstellbar sind, da insbesondere die jeweiligen Faserhalbzeuge an sich schon hochgenau gefertigt werden können. Auch die Profilelemente können üblicherweise mit äußerst geringen Toleranzen hergestellt werden, so dass sich insgesamt Verbindungsstrukturen schaffen lassen, welche hochgenau sind.

In weiterer vorteilhafter Ausgestaltung der Erfindung wird als Kunststoff zum Einspritzen in den entsprechenden Formbereich des Werkzeugs ein Harz oder ein faserverstärkter Kunststoff verwendet. Derartige Harze bzw. Kunststoffe eignen sich besonders für den vorliegenden Spritzpressprozess, wobei hierdurch äußerst steife und stabile Kunststoffknotenelemente zu schaffen sind.

Eine weitere vorteilhafte Ausführungsform sieht vor, dass als Aufnahmen jeweilige Aufnahmeöffnungen in dem Faserhalbzeug vorgesehen werden. Diese Aufnahmeöffnungen können bereits durch die Ausbildung des jeweiligen Faserhalbzeugs bzw. des Textils vorgegeben sein. Denkbar ist es jedoch auch, dass diese beim Vorformen des Faserhalbzeugs mittels jeweils eines entsprechenden Domes, der in das Textil (zwischen den Gewebelagen oder auch durch Eindrücken) eindringt, erzeugt werden. Durch mehr oder minder tiefes Einfahren des Domes kann die Öffnungstiefe der Aufnahmeöffnung des jeweiligen Textils bzw. Faserhalbzeugs somit bedarfgerecht variiert werden.

Eine weitere vorteilhafte Ausführungsform der Erfindung sieht vor, dass als Profilelemente offene Profile oder Hohlprofile verwendet werden. Derartige Profile bzw. Profilelemente können dabei in einfacher Weise beispielsweise durch ein Pultrusions- oder Strangpressverfahren hergestellt werden.

Schließlich hat es sich als vorteilhaft gezeigt, wenn sich das jeweilige Kunststoffknotenelement nicht nur auf die Funktion in der Verbindung der jeweiligen Profilelemente beschränkt, sondern darüber hinaus als Rahmenelement, insbesondere einer Kraftwagenkarosserie oder eines beweglichen Flügels wie beispielsweise einer Tür, Klappe oder Haube oder dergleichen gestaltet wird. So ist es beispielsweise denkbar, die Karosseriesäule einer Kraftwagenkarosserie mit wenigstens einem solchen Kunststoffknotenelement zu gestalten, durch welche außerdem jeweilige Profilelemente miteinander verbunden sind. Dies ermöglicht eine einfache und schnelle Herstellung der Karosserie mit einem äußerst geringen Gewicht und ohne Einbußen an Steifigkeit oder Unfallsicherheit. Die Herstellung kann dabei in einem einzigen großen Werkzeug erfolgen, welches beispielsweise die gesamte Seitenstruktur vom Vorder- bis zum Hinterwagen umfasst. Denkbar ist dabei auch eine Modulbauweise aus beispielsweise einer Säule mit einem oder mehreren Profilelementen, was bei einem anschließenden Zusammenbau in unterschiedlicher Zusammensetzung einen Weg zur Erzielung einer großen Variantenvielfalt mit einzelnen Leichtbaubasismodulen eröffnet.

Die vorstehend im Zusammenhang mit den erfindungsgemäßen Verfahren beschriebenen Vorteile ergeben sich auch für die Verbindungsstruktur gemäß Patentanspruch 6.

Weitere Vorteile, Merkmale und Einzelheiten der Erfindung ergeben sich aus der nachfolgenden Beschreibung bevorzugter Ausführungsbeispiele sowie anhand der Zeichnungen.

Dabei zeigen:

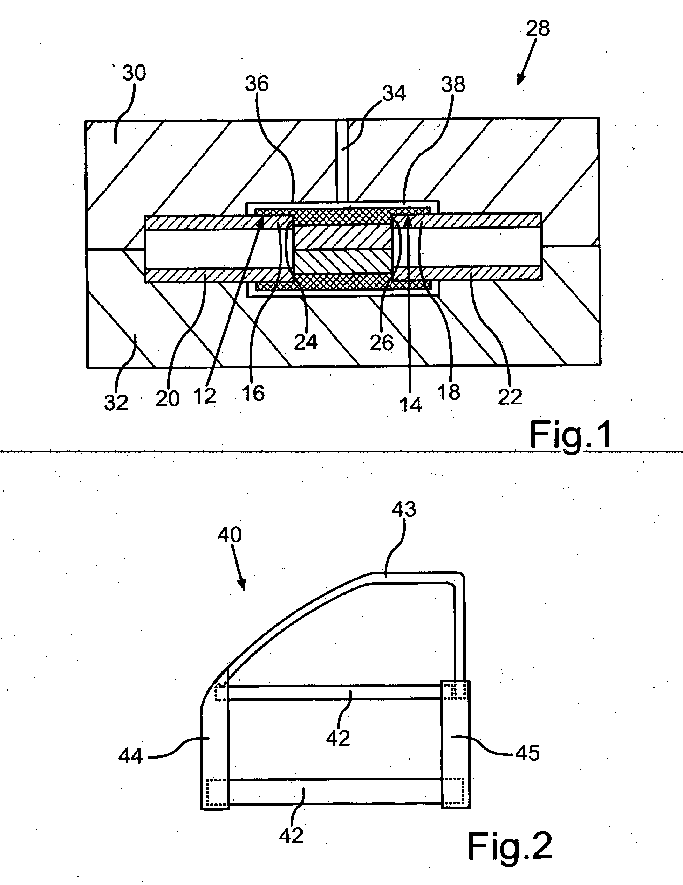

- Fig. 1: eine schematische Schnittansicht durch ein Werkzeug zum Herstellen einer Verbindungsstruktur für einen Kraftwagen, wobei vorliegend zwei Profilelemente über jeweilige Verbindungsbereiche in korrespondierende Aufnahmen eines Faserhalbzeugs eingesteckt werden und dieser Zusammenbau in das Werkzeug eingelegt wird, wonach ein Kunststoffknotenelement durch Einspritzen von Kunststoff in einem Spritzpressprozess in einen hierfür vorgesehenen Formbereich einer Form des Werkzeugs im Bereich des Faserhalbzeugs erzeugt wird, und wobei das den eingespritzten Kunststoff und das Faserhalbzeug umfassende Kunststoffknotenelement im Anschluss daran durch eine entsprechende Wärme- und/oder Druckbeaufschlagung im Werkzeug ausgehärtet wird;
- Fig. 2: eine schematische Seitenansicht auf eine Verbindungsstruktur für einen Kraftwagen gemäß einer ersten Ausführungsform, bei welcher die Verbindungsstruktur als Rahmenstruktur eines beweglichen Flügels in Form einer Seitentür ausgebildet ist;
- Fig. 3: eine schematische Draufsicht auf eine zweite Ausführungsform einer Verbindungsstruktur für einen Kraftwagen, welche im vorliegenden Fall als Hilfsträger, beispielsweise als Integralträger oder Achsträger, zur Festlegung an einer Kraftwagenkarosserie ausgebildet ist; und
- Fig. 4: eine schematische Seitenansicht auf eine dritte Ausführungsform einer Verbindungsstruktur, welche vorliegend als Karosseriestruktur eines Personenkraftwagens mit jeweiligen Profilelementen, die über jeweilige Kunststoffknotenelemente miteinander verbunden sind, ausgebildet ist.

In Fig. 1 ist in einer schematischen Schnittansicht ein Werkzeug zum Herstellen einer im Weiteren noch näher erläuterten Verbindungsstruktur für einen Kraftwagen dargestellt. In diesem Zusammenhang soll ein entsprechendes Verfahren zum Herstellen dieser Verbindungsstruktur im Weiteren erläutert werden.

Zunächst umfasst die Verbindungsstruktur wenigstens ein Faserhalbzeug 10, welches üblicherweise im Zusammenhang mit dem nachfolgend noch weiter erläuterten Verfahren als sogenanntes Preform bezeichnet wird. Dieses Faserhalbzeug 10 besteht beispielsweise aus Kohle- oder Glasfasern, welche in einem separaten bzw. vorgelagerten Herstellungsschritt erzeugt und unter anderem auch vorkonsolidiert werden können. Bei der Herstellung diese Faserhalbzeugs 10 werden dabei entsprechende Aufnahmen 12, 14 für korrespondierende Verbindungsbereiche 16, 18 jeweiliger Profilelemente 20, 22 vorgesehen. Im vorliegenden Ausführungsbeispiel sind die Profilelemente 20, 22 beispielsweise als Rohrprofile mit entsprechenden Verbindungsbereichen 16, 18 gestaltet, an welche die als Aufnahmeöffnungen ausgebildeten Aufnahmen 12, 14 im Wesentlichen formgetreu angepasst sind. Diese formtreue Anpassung ist jedoch nicht zwingender Maßen erforderlich. Demzufolge sind die Aufnahmen 12, 14 vorliegend als hohle, lochförmige Aufnahmeöffnungen innerhalb des insgesamt ebenfalls hohlen Faserhalbzeugs 10 ausgebildet, wobei beispielsweise jeweilige Anschläge 24, 26 die Aufnahmen 12, 14 in ihrer Einstecktiefe beschränken, so dass sich hierdurch eine äußerst genaue reproduzierbare Einstecktiefe für die jeweiligen Profilelemente 20, 22 ergibt. An dieser Stelle sei angemerkt, dass das Faserhalbzeug 10 natürlich in einer Vielzahl möglicher Ausführungsformen gestaltet werden kann. Anstelle der Aufnahmeöffnungen können auch Aufnahmen 12, 14 gestaltet werden, welche beispielsweise als entsprechende Zapfen ausgebildet sind. Ebenfalls ist das Faserhalbzeug 10 nicht darauf beschränkt, einteilig ausgebildet zu sein. Eine mehrteilige Gestaltung wäre ebenso denkbar. In diesem Zusammenhang wäre es auch denkbar, dass jeweilige Teilbereiche der entsprechenden Aufnahmen 12, 14 durch jeweilige Teilelemente des Faserhalbzeugs 10 gebildet werden und beim Zusammenbau des Faserhalbzeugs 10 sich somit auch ein Zusammenbau der jeweiligen Aufnahmen 12, 14 ergibt.

Nachdem die jeweiligen Profilelemente 20, 22 in die korrespondierenden Aufnahmen 12, 14 des Faserhalbzeugs 10 eingesteckt worden sind, wird dies zusammen in das in Fig. 1 dargestellte Werkzeug 28 eingelegt und anschließend die beiden Formhälften 30, 32 geschlossen. In diesem Zusammenhang sei erwähnt, dass es natürlich prinzipiell auch denkbar wäre, die jeweiligen Profilelemente 20, 22 und das jeweilige Faserhalbzeug 10 erst beim Einlegen in das Werkzeug 28 miteinander zu verbinden bzw. gegebenenfalls zusammenzustecken.

Nach dem Schließen des Werkzeugs 28 kann nun in einem nächsten Verfahrensschritt in einem Spritzpressprozess, welcher üblicherweise auch als RTM-Verfahren bezeichnet wird, das Faserhalbzeug 10 mit einem Kunststoff, insbesondere einem Harz oder einem faserverstärkten Kunststoff, versehen werden. Als Harze eignen sich dabei insbesondere Formaldehydharze oder Reaktionsharze. Das Einspritzen des Kunststoffes erfolgt im vorliegenden Fall über einen oder mehrere Einspritzkanäle 34, welcher bzw. welche in einem Formbereich 36 einer - eine entsprechende Textur aufweisenden - Form des Werkzeugs 28 mündet bzw. münden. Dieser Formbereich 36 der Form des Werkzeugs bildet die Negativform eines jeweiligen Kunststoffknotenelements 38, welches im Weiteren unter Bezugnahme auf die Fig. 2 bis 4 noch näher erläutert werden wird. Es ist somit erkennbar, dass das jeweilige Kunststoffknotenelement 38 dadurch gebildet wird, dass im entsprechenden Spritzpressprozess Kunststoff in dem Bereich des Faserhalbzeugs 10 eingebracht bzw. dieses Faserhalbzeug 10 mit Kunststoff versehen wird.

Nachdem der Kunststoff, insbesondere das Harz in den hierfür vorgesehenen Formbereich 36, in welcher das Faserhalbzeug 10 einliegt, eingespritzt worden ist, erfolgt schließlich in einem weiteren Verfahrensschritt das Aushärten des Kunststoffs bzw. des Harzes durch einen entsprechenden Wärmeeintrag und/oder eine entsprechende Druckbeaufschlagung im Bereich des Formbereichs 36 des Werkzeugs 28.

Insgesamt werden somit ein oder mehrere Kunststoffknotenelemente 38 zur Verbindung der jeweiligen Profilelemente 20, 22 geschaffen, welche äußerst stabil und einfach herstellbar sind. Zudem sind diese einzelnen Kunststoffknotenelemente 38 besonders gewichtsgünstig und sehr gut reproduzierbar herzustellen.

Im Folgenden sollen nun anhand der Fig. 2 bis 4 jeweilige Einsatzgebiete für entsprechende Verbindungsstrukturen, welche gemäß dem im Zusammenhang mit Fig. 1 erläuterten Verfahren hergestellt worden sind, beschrieben werden:
Hierzu zeigt Fig. 2 in einer schematischen Seitenansicht eine erste Ausführungsform einer Verbindungsstruktur für einen Kraftwagen, welche im vorliegenden Fall als Rahmenstruktur 40 für eine Seitentür eines Personenkraftwagens ausgebildet ist. In analoger Weise können auch andere Flügelelemente bzw. bewegliche Flügel wie Hauben, Klappen oder andere Türen mit einer derartigen Rahmenstruktur 40 ausgestattet werden. Erkennbar sind dabei im vorliegenden Fall drei Profilelemente 41, 42 und 43, welche die jeweiligen, in Fahrzeugquerrichtung verlaufenden Trägerelemente bzw. ein oberes, im Wesentlichen U-förmiges und um eine korrespondierende Seitenscheibe umlaufendes Trägerelement bilden, sowie zwei Kunststoffknotenelemente 44, 45, welche die Profilelemente 41, 42, 43 miteinander verbinden. Die Kunststoffknotenelemente 44, 45 bzw. die als Rahmenstruktur 40 ausgebildete Verbindungsstruktur ist dabei in einem Verfahren, welches im Zusammenhang mit Fig. 1 vorstehend erläutert wurde, hergestellt worden.

Die Besonderheit im vorliegenden Fall liegt nun außerdem darin, dass die Kunststoffknotenelemente 44, 45 sich vorliegend nicht nur auf die Funktion der Verbindung der jeweiligen Profilelemente 41, 42, 43 beschränken, sondern zusätzlich als jeweiliges Rahmenelement oder dgl. Funktionselement des beweglichen Flügels in Form der Seitentür ausgebildet sind. Dies ermöglicht eine einfache und schnelle Herstellung der Rahmenstruktur 40, welche vorliegend als Türträger ausgebildet ist. Zudem ergibt sich ein sehr geringes Gewicht der Tür insgesamt ohne Einbußen an Steifigkeit oder Unfallsicherheit. Die entsprechenden Kunststoffknotenelemente 44, 45 können dabei in einfacher Weise bedarfsgerecht gestaltet werden, also beispielsweise als Hohlprofile oder als offenes Profile, wobei Funktionsbereiche wie Aufnahmen, Befestigungsstellen oder dergleichen integriert sein können.

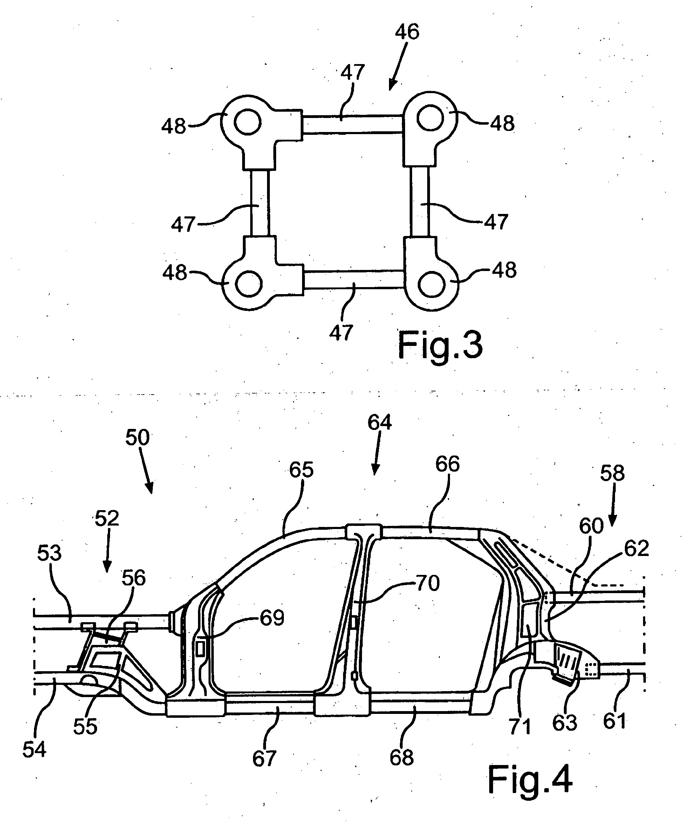

Fig. 3 zeigt in einer schematischen Draufsicht eine weitere Verbindungsstruktur, welche nach Art der in Fig. 1 erläuterten Verbindungsstruktur bzw. mit einem solchen Verfahren hergestellt worden ist. Die Verbindungsstruktur gemäß Fig. 3 ist vorliegend als Hilfsträger 46 in Form eines Integralträgers oder eines Achsträgers ausgebildet, welche unterseitig an jeweiligen Trägern oder dergleichen Strukturelementen einer Vorbaustruktur oder einer Heckstruktur einer Karosserie eines Personenkraftwagens befestigbar sind. Dabei umfasst im vorliegenden Ausführungsbeispiel der Hilfsträger 46 vier jeweilige Profilelemente 47, welche über vier korrespondierende, in jeweiligen Eckbereichen dieses insgesamt rahmenartigen Hilfsträgers 46 über entsprechende Kunststoffknotenelemente 48 miteinander verbunden sind.

Schließlich zeigt Fig. 4 in einer schematischen Seitenansicht eine weitere mögliche Ausführungsform einer Verbindungsstruktur, die im vorliegenden Fall zumindest im Wesentlichen als komplette Karosserie 50 eines Personenkraftwagens gestaltet ist. Im Bereich eines Vorderwagens bzw. einer Vorbaustruktur 52 ist dabei eine Mehrzahl von Profilelementen 53, 54 vorgesehen, welche unter anderem durch ein Kunststoffknotenelement 55 in Form eines einen Federbeindom 56 umfassenden Verbindungsteils miteinander verbunden sind. Die gesamte Vorbaustruktur 52 bzw. der gesamte Vorderwagen können dabei als Vorderwagenmodul ausgebildet sein.

Eine ähnliche Ausgestaltung findet sich im Bereich eines Hinterwagens bzw. einer Heckstruktur 58. Auch hier ist eine Mehrzahl von Profilelementen 60, 61 vorgesehen, welche durch jeweilige Kunststoffknotenelemente 62 gebildet werden. Im vorliegenden Ausführungsbeispiel können in diese Kunststoffknotenelemente 62 - wie im übrigen auch in der Vorbaustruktur 52 - jeweils nur die Funktion des Verbindungselements übernehmen oder aber zusätzlich als Vorteil bzw. Rahmenelement der jeweiligen Struktur ausgebildet sein. Als Beispiel hierfür sei im vorliegenden Fall ein Längsträger 63 oberhalb der Hinterachse genannt, welcher ebenfalls als Kunststoffknotenelement 62 ausgebildet ist, der in einem entsprechenden Spritzpressverfahren nach Art des im Zusammenhang mit Fig. 1 beschriebenen Verfahrens erläutert worden ist.

Im Bereich einer Fahrgastzelle 64 der Karosserie 50 ist ebenfalls eine Mehrzahl von Profilelementen vorgesehen. So sind beispielsweise jeweilige Profilelemente 65, 66 im Bereich der Dachrahmen vorgesehen. Insbesondere das vordere Profilelement 65 kann dabei entsprechend ausgeschäumt sein. Hierbei können im Bereich von jeweiligen Seitenschwellern entsprechende Profilelemente 67, 68 vorgesehen sein. Die beschriebenen Profilelemente 65 bis 68 sind dabei vorliegend über jeweilige Kunststoffknotenelemente 69, 70, 71 untereinander verbunden, welche im vorliegenden Fall al A-Säule, als B-Säule bzw. als C-Säule ausgebildet sind. Ähnlich wie bei dem in Fig. 2 beschriebenen Beispiel sind also auch hier Rahmenelemente bzw. Säulenelemente der Karosserie vorgesehen, welche durch Kunststoffknotenelemente 69, 70, 71 der entsprechenden Verbindungsstruktur gebildet werden. Dies ermöglicht wiederum eine einfache und schnelle Herstellung der Karosserie mit einem sehr geringen Gewicht ohne Einbuße an Steifigkeit oder Crashsicherheit. Die Herstellung kann dabei in einem einzigen großen Werkzeug 28 erfolgen, das die gesamte Seitenstruktur vom Vorder- bis zum Hinterwagen bzw. von der Vorbaustruktur 52 bis zur Heckstruktur 58 umfasst. Denkbar ist auch eine Modulbauweise aus beispielsweise einer entsprechenden Säule oder einem Rahmenelement mit einem oder mehreren Profilelementen, was bei einem anschließenden Zusammenbau in unterschiedlicher Zusammensetzung einen Weg zur Erzielung einer großen Variantenvielfalt mit einzelnen Leichtbau-Basismodulen eröffnet.

Die Profilelemente selbst können insbesondere als Pultrusionsprofile aus einem faserverstärkten Kunststoff oder aus einem Leichtmetallwerkstoff hergestellt sein. Allerdings sind auch andere Herstellungsverfahren denkbar. Die jeweiligen Faserhalbzeuge 10 können - je nach Einsatzgebiet - eine entsprechende Faserorientierung aufweisen, so dass der jeweilige Kunststoffknoten gemäß des Kraftverlustes maßgeschneidert auf die Bedürfnisse bzw. Belastungen angepasst ist.

Die vorliegende Verbindungsstruktur eignet sich nicht nur für entsprechende Rahmenstrukturen 40 von Flügeln für jeweilige Hilfsträger 46 oder für eine gesamte Karosserie 50 oder Teile hiervon, sondern darüber hinaus auch für Teilverbunde oder Module, beispielsweise umfassend Säulen- und Rahmenelemente, Stirnwandquerträger oder Querträger unter Windlauf.

## Patentansprüche

1. Verfahren zum Herstellen einer Verbindungsstruktur für einen Kraftwagen, bei welchem wenigstens zwei Profilelemente (20,22) in ein Werkzeug (28) eingelegt und durch ein Kunststoffknotenelement (38) miteinander verbunden werden, welches in dem Werkzeug (28) ausgehärtet wird,
**gekennzeichnet durch** die Schritte:
- Herstellen eines Faserhalbzeugs (10) mit jeweiligen Aufnahmen (12, 14) für korrespondierende Verbindungsbereiche (16, 18) der Profilelemente (20, 22);
- Verbinden der Verbindungsbereiche (16, 18) der Profilelemente (20, 22) mit den jeweiligen Aufnahmen (12, 14) des Faserhalbzeugs (10);
- Herstellen des Kunststoffknotenelements (38) **durch** Einspritzen von Kunststoff in einem Spritzpressprozess in einen hierfür vorgesehenen Formbereich (36) des Werkzeugs (28).

2. Verfahren nach Anspruch 1,
**dadurch gekennzeichnet, dass**
als Kunststoff zum Einspritzen in den Formbereich (36) des Werkzeugs (28) ein Harz oder ein faserverstärkter Kunststoff verwendet wird.

3. Verfahren nach Anspruch 1 oder 2,
**dadurch gekennzeichnet, dass**
als Aufnahmen (12, 14) jeweilige Aufnahmeöffnungen in dem Faserhalbzeug (10) vorgesehen werden.

4. Verfahren nach einem der vorhergehenden Ansprüche,
**dadurch gekennzeichnet, dass**
als Profilelemente (20, 22) offene Profile oder Hohlprofile verwendet werden.

5. Verfahren nach einem der vorhergehenden Ansprüche,
**dadurch gekennzeichnet, dass**
das Kunststoffknotenelement (38) als Rahmenelement, insbesondere einer Kraftwagenkarosserie (50) oder eines beweglichen Flügels, gestaltet wird.

6. Verbindungsstruktur für einen Kraftwagen, mit wenigstens zwei Profilelementen (20, 22), welche durch ein ausgehärtetes Kunststoffknotenelement (38) miteinander verbunden sind,
**dadurch gekennzeichnet, dass**
das Kunststoffknotenelement durch ein in einem Spritzpressprozess mit Kunststoff versehenes Faserhalbzeug (10) gebildet ist.

7. Verbindungsstruktur nach Anspruch 6,
**dadurch gekennzeichnet, dass**
jeweilige Aufnahmen (12, 14) des Faserhalbzeugs (10) mit korrespondierenden Verbindungsbereichen (16, 18) der Profilelemente (20, 22) unmittelbar verbunden sind.

8. Verbindungsstruktur nach Anspruch 6 oder 7,
**dadurch gekennzeichnet, dass**
die Profilelemente (20, 22) als offene Profile oder Hohlprofile ausgebildet sind.

9. Verbindungsstruktur nach einem der Ansprüche 6 bis 8,
**dadurch gekennzeichnet, dass**
die Profilelemente (20, 22) aus einer Metalllegierung, insbesondere einer Leichtmetalllegierung, oder aus einem insbesondere faserverstärkten Kunststoff, gebildet sind.

10. Verbindungsstruktur nach einem der Ansprüche 6 bis 9,
**dadurch gekennzeichnet, dass**
das Kunststoffknotenelement (38) als Rahmenelement, insbesondere einer Kraftwagenkarosserie (50) oder eines beweglichen Flügels, ausgebildet sind.

## Claims

1. Method for producing a connecting structure for a motor car, wherein at least two profile elements (20, 22) are inserted into a tool (28) and connected to each other by a plastic node element (38) which is set in the tool (28),
**characterised by** the steps:
- produce a semi-finished fibre product (10) with respective receiving areas (12, 14) for corresponding connection regions (16, 18) of the profile elements (20, 22);
- connect the connection regions (16, 18) of the profile elements (20, 22) to the respective receiving areas (12, 14) of the semi-finished fibre product (10);
- produce the plastic node element (38) by injecting plastic in a transfer moulding process into a moulding area (36) of the tool (28) provided for this purpose.

2. Method according to claim 1,
**characterised in that**
a resin or a fibre-reinforced plastic is used as plastic for injection into the moulding area (36) of the tool (28).

3. Method according to claim 1 or 2,
**characterised in that**
receiving openings are provided in the semi-finished fibre product (10) as receiving areas (12, 14).

4. Method according to one of the preceding claims,
**characterised in that**
open profiles or hollow profiles are used as profile elements (20, 22).

5. Method according to one of the preceding claims,
**characterised in that**
the plastic node element (38) is formed as a framework element, in particular of a motor car bodywork (50) or a movable wing.

6. Connecting structure for a motor car, having at least two profile elements (20, 22) which are connected to each other by a plastic node element (38) that has set,
**characterised in that**
the plastic node element is formed by a semi-finished fibre product (10) provided with plastic in a transfer moulding process.

7. Connecting structure according to claim 6,
**characterised in that**
receiving areas (12, 14) of the semi-finished fibre product (10) are each directly connected to corresponding connection regions (16, 18) of the profile elements (20, 22).

8. Connecting structure according to claim 6 or 7,
**characterised in that**
the profile elements (20, 22) are formed as open profiles or hollow profiles.

9. Connecting structure according to one of claims 6 to 8,
**characterised in that**
the profile elements (20, 22) are formed from a metal alloy, in particular a light metal alloy, or from an in particular fibre-reinforced plastic.

10. Connecting structure according to one of claims 6 to 9,
**characterised in that**
the plastic node element (38) is formed as a framework element, in particular of a motor car bodywork (50) or a movable wing.

## Revendications

1. Procédé de fabrication d'une structure d'assemblage destinée à un véhicule automobile, selon lequel au moins deux éléments profilés (20, 22) sont placés dans un outil (28) et assemblés l'un à l'autre au moyen d'un élément de liaison en matière synthétique (38) qui est durci dans l'outil (28), **caractérisé par** les étapes suivantes :
- la fabrication d'un produit semi-fini en fibres (10) présentant des logements respectifs (12, 14) destinés à des parties d'assemblage correspondantes (16, 18) des éléments profilés (20, 22) ;
- l'assemblage des parties d'assemblage (16, 18) des éléments profilés (20, 22) et des logements (12, 14) respectifs du produit semi-fini en fibres (10) ;
- la fabrication de l'élément de liaison en matière synthétique (38) par injection de matière synthétique selon un procédé de moulage par injection dans une partie moule (36) de l'outil (28) prévue à cet effet.

2. Procédé selon la revendication 1, **caractérisé en ce qu'**en tant que matière synthétique destinée à être injectée dans la zone de moule (36) de l'outil est utilisée une résine ou une matière synthétique renforcée par des fibres.

3. Procédé selon la revendication 1 ou la revendication 2, **caractérisé en ce qu'**en tant que logement (12, 14) sont aménagées des ouvertures de logement respectives dans le produit semi-fini en fibres (10).

4. Procédé selon l'une quelconque des revendications précédentes, **caractérisé en ce qu'**en tant qu'élément profilés (20, 22) sont utilisés des profilés ouverts ou des profilés creux.

5. Procédé selon l'une quelconque des revendications précédentes, **caractérisé en ce que** l'élément de liaison en matière synthétique (38) est conçu comme un élément de châssis, en particulier d'une carrosserie (50) de véhicule automobile ou d'une aile mobile.

6. Structure d'assemblage destinée à un véhicule automobile, dotée d'au moins deux éléments profilés (20, 22) qui sont assemblés l'un à l'autre au moyen d'un élément de liaison en matière synthétique (38) durci, **caractérisée en ce que** l'élément de liaison en matière synthétique est conçu au moyen d'un produit semi-fini en fibres (10) pourvue de matière synthétique selon un procédé de moulage par transfert.

7. Structure d'assemblage selon la revendication 6, **caractérisée en ce que** les logements (12, 14) respectifs du produit semi-fini en fibres (10) sont assemblés directement aux zones de liaison (16, 18) correspondantes des éléments profilés (20, 22).

8. Structure d'assemblage selon la revendication 6 ou 7, **caractérisée en ce que** les éléments profilés (20, 22) sont conçus comme des profilés ouverts ou des profilés creux.

9. Structure d'assemblage selon l'une quelconque des revendications 6 à 8, **caractérisée en ce que** les éléments profilés (20, 22) sont conçus en alliage métallique, en particulier en alliage métallique léger, ou encore à partir d'une matière synthétique particulièrement renforcée par des fibres.

10. Structure d'assemblage selon l'une quelconque des revendications 6 à 9, **caractérisée en ce que** l'élément de liaison en matière synthétique (38) est conçu comme un élément de châssis, en particulier d'une carrosserie (50) de véhicule automobile ou d'une aile mobile.
